(19) **Europäisches Patentamt / European Patent Office / Office européen des brevets**

(11) **EP 2 336 867 B1**

(12) **FASCICULE DE BREVET EUROPEEN**

(45) Date de publication et mention
de la délivrance du brevet:
**26.06.2019 Bulletin 2019/26**

(51) Int Cl.:
*G06F 3/0482* (2013.01)   *G06F 3/0485* (2013.01)
*G06F 3/0488* (2013.01)

(21) Numéro de dépôt: **10196027.6**

(22) Date de dépôt: **20.12.2010**

(54) **Procédé et dispositif de contrôle de l'affichage sur un dispositif d'affichage d'une pluralité d'éléments d'une liste**

Verfahren und Vorrichtung zur Anzeigekontrolle auf einer Anzeigevorrichtung für eine Vielzahl von Elementen einer Liste

Method and device for controlling the display on a display device of a multiplicity of elements in a list

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.12.2009 FR 0959298**

(43) Date de publication de la demande:
**22.06.2011 Bulletin 2011/25**

(73) Titulaire: **Orange
75015 Paris (FR)**

(72) Inventeur: **Roulliere, Stephane
35000, RENNES (FR)**

(74) Mandataire: **Pecher, Gilles et al
Cabinet Beau de Loménie
158, rue de l'Université
75340 Paris Cedex 07 (FR)**

(56) Documents cités:
**EP-A2- 2 045 703       EP-A2- 2 116 927
WO-A1-92/08184        WO-A1-2008/067811
US-A1- 2009 121 903   US-A1- 2009 237 371**

**Description**

Arrière-plan de l'invention

La présente invention se rapporte au domaine général des applications multimédia.

Elle concerne plus particulièrement le contrôle, au moyen d'une interface tactile, de l'affichage d'éléments d'une liste par un dispositif d'affichage. Les éléments de la liste peuvent être notamment des contenus multimédia tels que des flux vidéo, des images, des applications, des fichiers de données, etc., et le dispositif d'affichage, un écran, par exemple d'ordinateur ou de téléviseur.

L'invention s'applique ainsi de façon privilégiée mais non limitative à l'affichage sur un écran de contenus audiovisuels, par exemple en vue d'offrir un service de zapping parmi plusieurs chaînes diffusées par un opérateur de télévision numérique ou de navigation dans un catalogue de vidéos.

On assiste depuis quelques années au développement des équipements multimédia équipés d'interfaces tactiles, tel qu'un écran tactile ou un pavé tactile (aussi connu sous le nom de « touchpad »).

Le pavé tactile est classiquement employé comme moyen de remplacement d'une souris, notamment sur les ordinateurs portables. Il constitue un dispositif de pointage performant, qui permet de déplacer aisément un curseur sur l'écran d'un ordinateur.

Toutefois, son utilisation devient plus délicate dès qu'il est question d'agir sur des éléments affichés sur l'écran de l'ordinateur.

Pour pallier ce problème, le pavé tactile est souvent associé à un ou plusieurs boutons positionnés au-dessus ou en-dessous du pavé tactile, et qui font office de boutons de sélection de la même façon que les boutons d'une souris, ce qui limite les actions qui peuvent être effectuées avec le pavé tactile seul. Ces boutons associés au pavé tactile permettent, en particulier, de contrôler l'affichage des éléments sur l'écran, un tel contrôle n'étant pas actuellement possible d'une manière aisée et fiable avec un pavé tactile.

Il existe donc un besoin de disposer d'un procédé de contrôle de l'affichage d'éléments sur un dispositif d'affichage au moyen d'une interface tactile, qui ne nécessite pas le recours à des équipements périphériques supplémentaires tels que des boutons, et qui soit applicable aussi bien au cas d'utilisation d'une interface tactile sous forme de pavé tactile ou d'un écran tactile.

Le document EP 2 116 927 décrit un téléphone mobile à écran tactile dans lequel une liste de message peut être affichée. Grâce à l'écran tactile, un utilisateur peut faire défiler les messages dans une première direction. Par ailleurs, un mouvement dans une deuxième direction permet d'afficher, à la place d'un message sélectionné, un autre message lié au message sélectionné. Cependant, il n'est pas possible d'augmenter la quantité d'informations affichées pour un message sélectionné.

Le document EP 2 045 073 décrit une méthode pour afficher simultanément des images sur un écran, afin de permettre à un utilisateur de rechercher ou de sélectionner facilement des images.

Le document WO2008/067811 décrit un procédé d'accès direct à des informations concernant un groupe d'événements multimédia, tels que des images, des vidéos, des films, des pistes de musique, etc.

Objet et résumé de l'invention

La présente invention répond à ce besoin en proposant un procédé de contrôle de l'affichage sur un dispositif d'affichage d'une pluralité d'éléments appartenant à une liste, selon la revendication indépendante 1.

L'invention vise également un programme d'ordinateur comportant des instructions pour l'exécution des étapes du procédé de contrôle selon l'une quelconque des revendications 1 à 9 lorsque ledit programme est exécuté par un ordinateur, ainsi qu'un support d'enregistrement lisible par un ordinateur sur lequel est enregistré un programme d'ordinateur comprenant des instructions pour l'exécution des étapes du procédé de contrôle selon l'une quelconque des revendications 1 à 9.

Corrélativement, l'invention vise un dispositif de contrôle de l'affichage sur un dispositif d'affichage d'une pluralité d'éléments appartenant à une liste, selon la revendication indépendante 12.

Seuls les aspects revendiqués dans les revendications font partie de l'invention. Les aspects non revendiqués ne sont que des exemples ne faisant pas partie de l'invention.

L'invention permet ainsi, de manière très simple, de contrôler l'affichage d'éléments d'une liste selon plusieurs modes d'affichage à l'aide d'une interface tactile uniquement. Avantageusement le déclenchement d'un nouveau mode d'affichage ne requiert qu'un seul mouvement, et n'est pas associé à une gesture spécifique.

Ainsi, par exemple, dans le deuxième mode d'affichage, des informations supplémentaires par rapport à celles affichées dans le premier mode d'affichage sont affichées pour au moins un élément de la liste.

L'affichage d'informations pour les éléments de la liste occupe une partie de la surface d'affichage du dispositif d'affichage. Plus la quantité d'information est importante, plus la surface occupée est grande. Il est donc nécessaire de trouver un compromis entre la quantité d'information affichée et la surface occupée. Selon l'invention, dans le premier mode d'affichage la surface occupée est limitée mais la quantité d'information affichée est également limitée, et dans le deuxième mode d'affichage la quantité d'information affichée est plus importante mais la surface occupée est également plus importante. Autrement dit, le premier et le deuxième mode d'affichage correspondent à deux compromis différents entre quantité d'information affichée et surface occupée. L'invention permet, en déclenchant le deuxième mode d'affichage, de basculer d'un compromis à l'autre.

En variante, dans le deuxième mode d'affichage, est affiché, pour au moins un élément de la liste, au moins un élément d'interface utilisateur utilisable pour déclencher l'exécution d'une fonction en rapport avec cet élément de la liste.

L'invention permet ainsi d'enrichir, par l'intermédiaire de chaque mode d'affichage, les informations ou les fonctions disponibles pour les éléments contenus dans la liste.

Le recours à des directions de défilement et de déclenchement distinctes offre en outre la possibilité d'activer simultanément le défilement des éléments de la liste et l'affichage selon des modes d'affichage différents.

Toutefois, le déclenchement de l'affichage selon le deuxième mode d'affichage n'est pas nécessairement simultané au défilement de la liste.

Préférentiellement, la direction de déclenchement de l'affichage du deuxième mode sera sensiblement perpendiculaire à la direction de défilement de la liste.

De cette sorte, la distinction entre le mouvement provoquant le défilement de la liste et le mouvement déclenchant le deuxième mode d'affichage est facilitée. Il en résulte une tolérance plus importante vis-à-vis de la précision du mouvement requise pour déclencher le deuxième mode d'affichage.

On notera qu'au sens de l'invention, un mode d'affichage des éléments de la liste peut porter sur tout ou partie des éléments de la liste. Notamment le mode d'affichage pourra ne concerner qu'un élément particulier, se trouvant par exemple dans une zone de focus sur le dispositif d'affichage.

L'invention s'applique de façon privilégiée à la recherche de chaînes de télévision diffusées par un opérateur, et de zapping d'une chaîne à l'autre à l'aide d'une télécommande intégrant une interface tactile. Les éléments de la liste représentent alors chacun, dans un tel contexte, une chaîne de télévision et un flux vidéo associé, tandis que les premier et deuxième modes d'affichage peuvent faire référence respectivement aux numéros des chaînes et à une image miniature représentative du flux vidéo diffusé sur la chaîne. L'invention permet aisément de déclencher le deuxième mode d'affichage, afin de compléter les informations offertes par la télécommande.

Toutefois d'autres applications peuvent être envisagées comme la navigation parmi une liste de contenus multimédia ou d'applications logicielles ou de fichiers de données quelconques.

Dans un mode particulier de réalisation de l'invention, dans le deuxième mode d'affichage, en réponse à un mouvement exercé sur l'interface tactile dans la direction de défilement, est déclenché un défilement des éléments de la liste pendant lequel au moins un élément est affiché dans le deuxième mode d'affichage.

Le défilement de la liste est ainsi permis depuis chaque mode d'affichage.

Dans un mode particulier de réalisation de l'invention, on met fin à l'affichage du deuxième mode d'affichage en réponse à un mouvement exercé sur l'interface tactile dans la direction de déclenchement, dans un sens inverse au sens du mouvement exercé pour déclencher l'affichage du deuxième mode.

Corrélativement, le dispositif de contrôle selon l'invention peut comprendre en outre des moyens pour mettre fin à l'affichage du deuxième mode d'affichage en réponse à un mouvement exercé sur l'interface tactile dans la direction de déclenchement, dans un sens inverse au sens du mouvement exercé pour déclencher l'affichage du deuxième mode.

Ainsi, le déclenchement du deuxième mode d'affichage (ou de manière générale du n-ième mode d'affichage) est totalement réversible. La solution proposée par l'invention est par conséquent flexible et permet d'ajouter et/ou de supprimer facilement des modes d'affichage sur le dispositif d'affichage en fonction des souhaits de l'utilisateur de l'interface tactile.

Dans un autre mode de réalisation, la vitesse de défilement des éléments de la liste dépend de la vitesse du mouvement exercé sur l'interface tactile dans la direction de défilement.

Corrélativement, le dispositif de contrôle selon l'invention peut comprendre en outre des moyens pour déterminer la vitesse de défilement des éléments de ladite liste en fonction de la vitesse du mouvement exercé sur l'interface tactile dans la direction de défilement.

L'utilisateur de l'interface tactile peut ainsi contrôler la vitesse de défilement de la liste sur le dispositif d'affichage.

Par ailleurs, on peut appliquer un coefficient de décélération à la vitesse de défilement des éléments de la liste de manière à ralentir progressivement la vitesse de défilement.

L'invention reproduit de cette sorte le mouvement d'une roue physique pour la présentation des éléments de la liste à l'utilisateur.

Dans une première variante de réalisation, on ralentit la vitesse de défilement des éléments de la liste en réponse à un mouvement de ralentissement exercé sur l'interface tactile dans la direction de défilement et dans un sens inverse au sens du mouvement ayant provoqué le défilement de la liste.

Corrélativement, le dispositif de contrôle peut comprendre en outre des moyens pour ralentir la vitesse de défilement des éléments de ladite liste en réponse à un mouvement de ralentissement exercé sur l'interface tactile dans la direction de défilement et dans un sens inverse au sens du mouvement ayant provoqué le défilement de ladite liste.

De cette façon, l'utilisateur de l'interface tactile peut décider lui-même le moment à partir duquel il souhaite observer un ralentissement du défilement, par exemple, lorsque les éléments affichés sur le dispositif d'affichage se rapprochent d'un élément auquel il souhaite accéder ou qu'il souhaite sélectionner.

Dans une seconde variante de réalisation, la vitesse de défilement est ralentie en fonction de la pression exercée sur l'interface tactile lors du mouvement du ralentissement.

Corrélativement, le dispositif de contrôle selon l'invention comprend en outre :

- des moyens pour évaluer la pression exercée sur l'interface tactile lors du mouvement du ralentissement ; et
- des moyens pour ralentir la vitesse de défilement des éléments de la liste en fonction de la pression évaluée.

Ainsi, l'utilisateur peut non seulement décider le moment à partir duquel il souhaite ralentir le défilement de la liste, mais également l'ampleur de ce ralentissement, en exerçant une pression plus ou moins importante sur l'interface tactile. Par exemple, plus la pression exercée sur l'interface tactile est importante, plus la décélération du défilement sera importante.

Selon un autre aspect, l'invention vise un système comprenant :

- une interface tactile ; et
- un dispositif de contrôle conforme à l'invention, adapté à contrôler l'affichage sur un dispositif d'affichage d'une pluralité d'éléments appartenant à une liste en réponse à un mouvement exercé sur ladite interface tactile.

Ce système est par exemple une télécommande tactile lorsque les éléments sont des flux vidéo diffusés par des chaînes de télévision.

Dans un mode particulier de réalisation, les différentes étapes du procédé de contrôle sont déterminées par des instructions de programmes d'ordinateurs.

En conséquence, l'invention vise aussi un programme d'ordinateur sur un support d'informations, ce programme étant susceptible d'être mis en oeuvre dans un dispositif de contrôle ou plus généralement dans un ordinateur, ce programme comportant des instructions adaptées à la mise en oeuvre des étapes d'un procédé de contrôle tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé de contrôle, le dispositif de contrôle et le système selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, dans son environnement, un système conforme à l'invention, dans un mode particulier de réalisation ;
- la figure 2 représente, sous forme d'ordinogramme, les principales étapes du procédé de contrôle selon l'invention, dans un mode particulier de réalisation dans lequel il est mis en oeuvre par le système représenté sur la figure 1 ;
- les figures 3A à 3D illustrent des exemples de modes d'affichage pouvant être déclenchés lors de la mise en oeuvre du procédé de contrôle selon l'invention.
- les figures 4A à 4C illustrent d'autres exemples de modes d'affichage pouvant être déclenchés lors de la mise en oeuvre du procédé de contrôle selon l'invention.

Description détaillée d'un mode de réalisation

Comme décrit précédemment, l'invention concerne le contrôle de l'affichage sur un dispositif d'affichage d'une pluralité d'éléments appartenant à une liste, au moyen d'une interface tactile.

Dans le mode de réalisation décrit ici, on envisage le contrôle de l'affichage sur un écran de téléviseur d'une pluralité d'éléments représentant des flux vidéo, en utilisant une télécommande équipée d'une interface tactile.

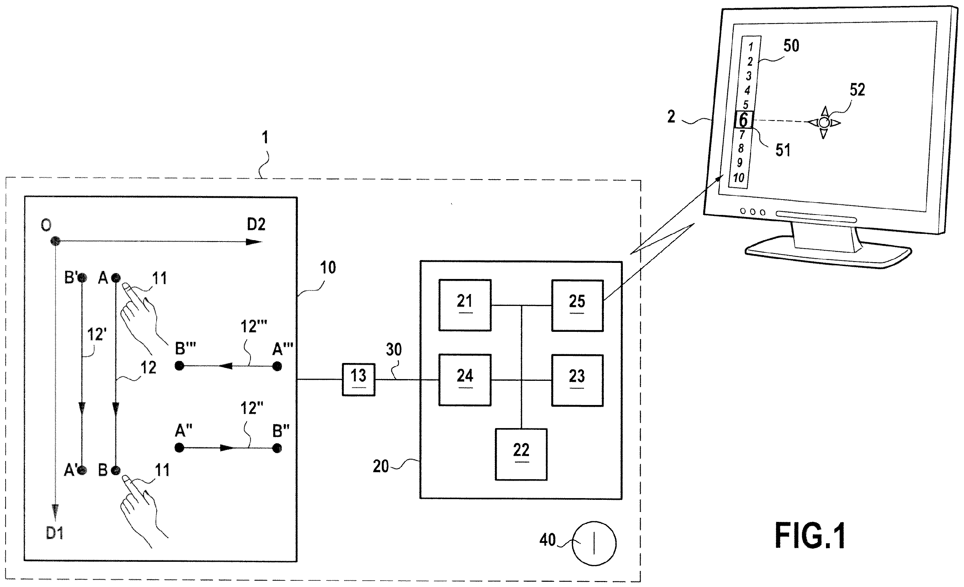

La **figure 1** représente, dans son environnement, un système 1 conforme à l'invention, dans un mode particulier de réalisation.

Le système 1 est une télécommande tactile, permettant de contrôler l'affichage d'éléments représentant des flux vidéo sur un écran 2 de téléviseur.

Ces éléments sont ici des programmes de télévision, diffusés par exemple par un opérateur de télévision numérique (non représenté sur la figure 1), par l'intermédiaire de chaînes de télévision.

La télécommande 1 est munie d'une interface tactile 10 de type capacitif. Cette interface tactile est dotée d'une surface conductrice, composée d'un maillage d'électrodes métalliques, ainsi que de capteurs capacitifs (non représentés sur la figure). Ces capteurs sont positionnés à divers endroits de la surface conductrice de sorte à former un maillage, chaque capteur étant associé à un point de coordonnées fixées.

De façon connue en soi, une interface tactile de type capacitif exploite le principe selon lequel, lorsque deux corps conduisant l'électricité sont très proches l'un de l'autre, leurs champs électriques interagissent et génèrent une capacité électrique. L'un des corps peut être notamment le doigt 11 d'un utilisateur de la télécommande.

Le mouvement (ex. 12, 12' ou 12") exercé par le doigt 11 sur l'interface tactile 10 est déterminé par une unité 13 de traitement à partir de la position (i.e. des coordonnées) des capteurs dont la capacité a augmenté en réponse à ce mouvement.

On notera, que dans l'exemple envisagé ici, l'unité 13 de traitement est également apte à déterminer, en analysant le nombre d'électrodes métalliques activées sur la surface conductrice, la surface d'appui (ou de contact) du doigt 11 lors du mouvement. Cette surface d'appui est représentative de la pression exercée par le doigt lors du mouvement.

En variante, l'interface tactile 10 peut être munie de capteurs de pression indépendants. En outre d'autres types d'interfaces tactiles peuvent être envisagés, comme par exemple une interface tactile de type résistif.

La télécommande 1 est également dotée ici d'un dispositif de contrôle 20, conforme à l'invention. L'interface tactile 10 et le dispositif de contrôle 20 sont connectés via une liaison de données 30, connue en soi (ex. un câble électrique).

On notera que, dans l'exemple envisagé ici, l'interface tactile 10 et le dispositif de contrôle 20 sont colocalisés dans la télécommande 1. En variante, l'interface tactile 10 et le dispositif de contrôle 20 peuvent être intégrés dans des équipements distincts, et communiquer entre eux via une interface de communication filaire ou sans fil telle que par exemple, une interface de type WiFi® (Wireless Fidelity), Bluetooth®, ZigBee®, etc.

De même l'unité de traitement 13 peut être intégrée au dispositif de contrôle 20.

Le dispositif de contrôle 20 dispose ici de l'architecture matérielle d'un ordinateur.

Il comprend notamment un processeur 21, une mémoire vive 22, et une mémoire morte 23.

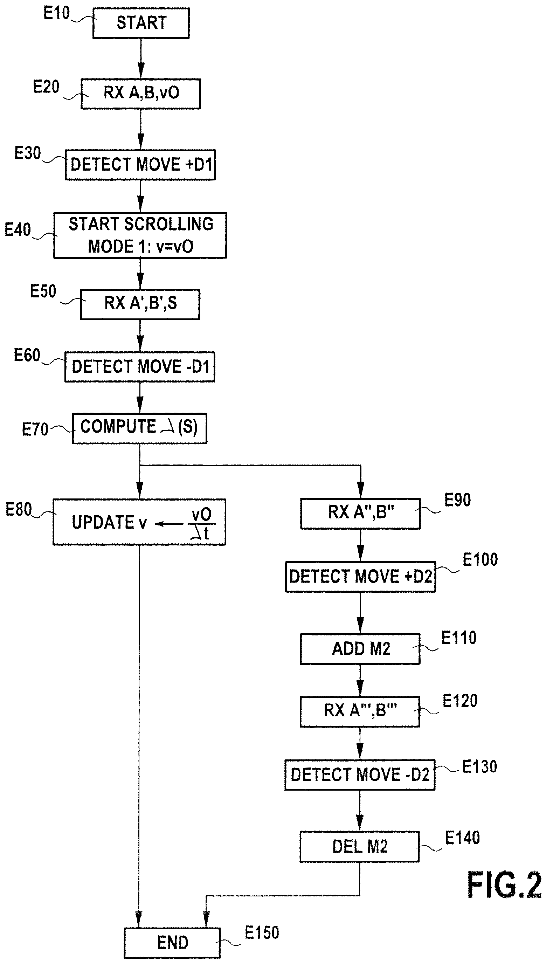

La mémoire morte 23 constitue un support d'enregistrement conforme à l'invention, lisible par le processeur 21 du dispositif de contrôle et sur lequel est enregistré un programme d'ordinateur conforme à l'invention. Ce programme comporte notamment des instructions pour l'exécution des étapes d'un procédé de contrôle selon l'invention, décrites ultérieurement en référence à la figure 2.

Le dispositif de contrôle 20 est doté également de moyens de communication 24 avec l'unité de traitement 13 de l'interface tactile 10, via la liaison de données 30.

Il dispose aussi de moyens de communication 25 pour envoyer des signaux de contrôle à l'écran de téléviseur 2, en réponse à un mouvement exercé sur l'interface tactile. Ces moyens de communication 25 comprennent ici une interface Bluetooth. L'écran 2 est également doté d'une telle interface.

En variante d'autres interfaces de communication peuvent être envisagées entre la télécommande 1 et l'écran 2 telles que par exemple une interface ZigBee ou une interface WiFi. Dans le cas d'un écran tactile, cette interface de communication n'est toutefois pas nécessaire : l'affichage de la liste et le dispositif de contrôle sont gérés par le même équipement.

Conformément à l'invention, deux directions distinctes D1 et D2 sont utilisées pour provoquer d'une part, le défilement de la liste des flux vidéo (i.e. programmes) proposés par l'opérateur de télévision numérique, et d'autre part, l'affichage des éléments selon divers modes d'affichage. Bien entendu une certaine déviation du mouvement par rapport à ces directions D1 et D2 est tolérée, en fonction de marges de tolérance prédéterminées.

Les directions D1 et D2 sont ici perpendiculaires, D1 désignant une direction verticale par rapport au sens d'utilisation de la télécommande tactile 1 représenté sur la figure 1, et D2 une direction horizontale. D1, respectivement D2, constitue une direction de défilement, respectivement de déclenchement, au sens de l'invention.

Dans la suite de la description, la direction D1 est nommée direction de défilement, tandis que la direction D2 est nommée indifféremment direction de modification du mode d'affichage ou direction de déclenchement.

Ces directions sont mémorisées dans la mémoire morte 23 du dispositif de contrôle 20.

La direction D1 est également associée dans la mémoire morte 23, à un sens de mouvement (de haut en bas ici), apte à déclencher le défilement de la liste, le sens inverse de ce mouvement étant apte à activer une réévaluation de la vitesse de défilement de la liste 50 de sorte à la ralentir.

De façon similaire, la direction D2 est associée dans la mémoire morte 23, à un sens de mouvement (de gauche à droite ici) apte à déclencher un nouveau mode d'affichage, le sens inverse de ce mouvement étant apte à mettre fin au dernier mode d'affichage activé.

Nous allons maintenant décrire, en référence à la **figure 2,** les principales étapes du procédé de contrôle selon l'invention, dans un mode particulier de réalisation dans lequel il est mis en oeuvre par le dispositif de contrôle 20 de la figure 1.

On suppose qu'un utilisateur de la télécommande tactile 1 souhaite accéder à un programme diffusé par l'opérateur de télévision numérique. A cette fin, il met en marche le téléviseur en activant un bouton de marche/arrêt 40 situé sur la télécommande (étape E10).

En variante, l'utilisateur peut effectuer un mouvement spécifique sur l'interface tactile 10, associé de façon unique à la mise en marche de la télécommande.

En réponse à une autre commande effectuée par l'utilisateur (mouvement spécifique sur l'interface tactile 10 ou appui sur un bouton dédié sur la télécommande 1) la télécommande 1 envoie un signal de contrôle à l'écran 2, via son interface 25, de manière à ce qu'il affiche la liste 50 des programmes proposés par l'opérateur. La chaîne en cours de diffusion est identifiée dans une zone 51 fixe dite de focus.

Un curseur 52 apparait également sur l'écran 2, visant à informer l'utilisateur qu'il peut contrôler l'affichage de la liste en exerçant un mouvement sur l'interface tactile 10 dans la direction D1 et/ou dans la direction D2.

On suppose maintenant que l'utilisateur exerce sur l'interface tactile 10, à l'aide de son doigt 11, un mouvement 12 partant d'un premier point de contact A et allant jusqu'à un second point de contact B. Le mouvement 12 est exercé de haut en bas dans la direction D1, avec une vitesse v0.

Le mouvement 12 est détecté par l'unité de traitement 13, en analysant la capacité des capteurs de l'interface tactile. L'augmentation de la capacité de certains capteurs est en effet représentative de l'appui exercé sur l'interface tactile. L'unité de traitement 13 déduit de la position de ces capteurs les coordonnées des points de contact A et B.

Elle évalue également ici la vitesse v0 du mouvement 12. Les moyens mis en oeuvre par l'unité de traitement 13 à cette fin sont connus en soi et ne seront pas détaillés davantage ici. De tels moyens sont décrits notamment dans le document WO 2008/000435.

Les coordonnées des points A et B ainsi que la vitesse v0 sont transmis par l'unité de traitement 13 au dispositif 20 de contrôle, via la liaison de données 30.

Sur réception de ces données (étape E20), le dispositif de contrôle 20 évalue la direction et le sens du mouvement 12 exercé sur l'interface tactile à partir des coordonnées des points A et B.

Puis la direction ainsi évaluée est comparée à la direction de défilement D1 et à la direction de déclenchement D2 stockées dans la mémoire morte 23.

Le dispositif de contrôle 20 détecte ici que le mouvement 12 a été exercé selon la direction de défilement D1, dans le sens de haut en bas (étape E30).

Il déclenche alors, en réponse à ce mouvement, le défilement de la liste 50 sur l'écran 2 dans la direction de défilement D1 de haut en bas (étape E40).

Pour ce faire, le dispositif de contrôle 20 envoie un signal de contrôle, par l'intermédiaire de ses moyens 25 de communication infrarouge, à l'écran 2.

Ce signal de contrôle comprend une commande de déclenchement d'un défilement des éléments de la liste selon un premier mode d'affichage M1, ainsi que les caractéristiques du premier mode d'affichage M1. Un tel signal de contrôle est connu en soi et ne sera pas détaillé davantage ici.

Dans l'exemple décrit ici, le premier mode d'affichage M1 consiste à afficher la chaîne diffusant l'élément dans la zone de focus 51. Sur réception de ce signal de contrôle, le défilement des éléments de la liste selon le premier mode M1 d'affichage est mis en oeuvre sur l'écran 2.

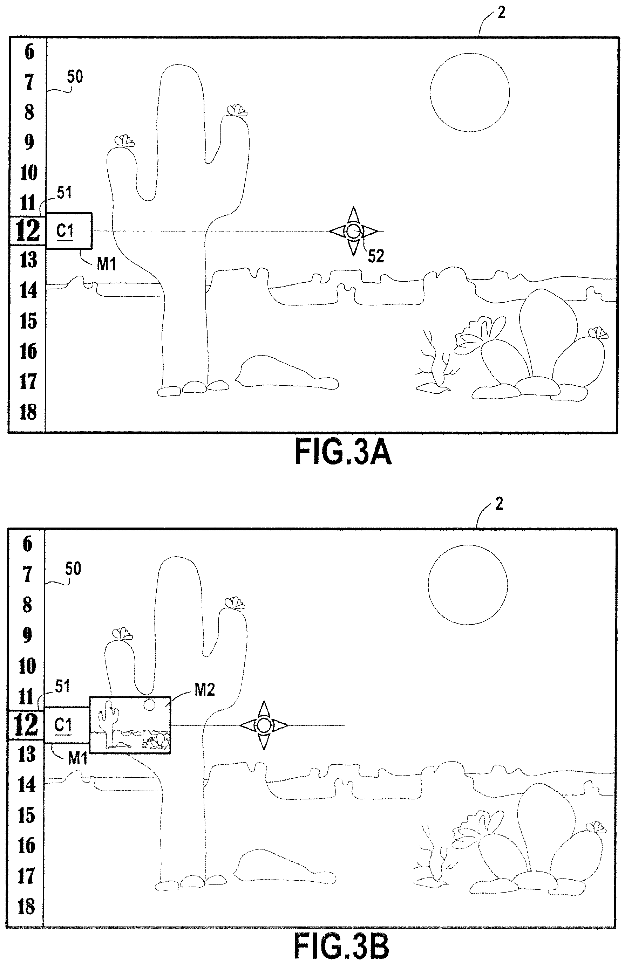

La **figure 3A** illustre un défilement des programmes de la liste 50 sur l'écran 2 selon le premier mode d'affichage. Conformément à ce premier mode d'affichage, la chaîne C1 associée au programme 12 situé dans la zone de focus 51 est affichée.

Le défilement de la liste est effectué à une vitesse v, et simule la rotation d'une roue sur le pourtour de laquelle est représentée la liste. La vitesse de défilement v dépend ici de la vitesse v0 du mouvement 12. Plus précisément, elle est prise initialement égale à la vitesse v0.

Puis, dans un second temps, on applique à cette vitesse v un coefficient de décélération de sorte à la ralentir progressivement. Ce coefficient de décélération vise à imprimer au défilement des éléments un principe d'inertie, de manière à reproduire le comportement d'une roue physique. On entend par inertie une décélération non linéaire dépendant de la vitesse de défilement initiale et du coefficient de décélération.

Dans le mode de réalisation envisagé ici, la décélération de la vitesse de défilement v est déclenchée en réponse à un mouvement 12' de ralentissement, exercé sur l'interface tactile 10 dans la direction D1, dans le sens inverse du sens du mouvement 12 qui a provoqué le défilement de la liste 50. En référence à la figure 1, le mouvement 12' part du point A' et va jusqu'au point B', autrement dit il s'exerce de bas en haut.

De cette sorte, l'utilisateur peut aisément contrôler, *a posteriori,* la vitesse de défilement des éléments de la liste et éventuellement stopper le défilement lorsque le programme qu'il a choisi s'approche de la zone de focus 51.

Le mouvement 12' est détecté par l'unité de traitement 13, de façon similaire au mouvement 12.

L'unité de traitement détermine en outre ici la pression exercée sur l'interface tactile par le doigt 11 de l'utilisateur lors de la réalisation du mouvement 12'.

Cette pression est évaluée à partir de la surface d'appui S du doigt 11 sur l'interface tactile 10, exercé lors du mouvement 12'. En effet, de façon connue en soi, plus la surface S' d'appui est élevée, plus l'utilisateur appuie fort sur l'interface tactile 10 et la pression est considérée comme élevée.

Pour de plus amples détails sur le calcul de la surface d'appui sur une interface tactile et de la prise en compte de cette surface comme représentative de la pression exercée sur l'interface tactile, l'homme du métier est invité à se référer au document intitulé « Design and comparison of acceleration methods for touchpad », S. Yun et G. Lee, Conférence on Human Factors in Computing Systems, 2007.

Les coordonnées des points A' et B' ainsi que la surface d'appui S sont alors transmis par l'unité de traitement 13 au dispositif 20 de contrôle, via la liaison de données 30.

Sur réception de ces données (étape E50), le dispositif de contrôle 20 évalue la direction du mouvement 12' exercé sur l'interface tactile, ainsi que le sens de ce mouvement, à partir des coordonnées des points A' et B'.

Le dispositif de contrôle 20 détecte ici que le mouvement 12' a été exercé selon la direction de défilement D1 (étape E60), de bas en haut.

Comme mentionné précédemment la détection d'un tel mouvement est apte à déclencher une décélération non linéaire du défilement de la liste, paramétrée par un coefficient de décélération λ.

Le coefficient de décélération λ dépend ici de la pression exercée sur l'interface tactile lors du mouvement 12', c'est-à-dire de la surface d'appui S : il est pris égal à la surface S (étape E70).

En réponse au mouvement 12', la vitesse de défilement est alors mise à jour par le dispositif de contrôle 20, à divers instants t, selon l'équation suivante (étape E80) :

$$v = \frac{v0}{\lambda t} = \frac{v0}{St}.$$

La vitesse v ainsi mise à jour est ensuite envoyée à l'écran 2, aux divers instants t, dans un signal de contrôle.

Sur réception de ce signal, l'écran 2 applique comme vitesse de défilement des éléments de la liste la vitesse v contenue dans ce signal.

En variante, le coefficient de décélération appliqué à la vitesse v peut dépendre de l'amplitude du mouvement 12' (typiquement de sa longueur). Mais il est également possible de considérer un coefficient de décélération prédéterminé, indépendant du mouvement réalisé sur l'interface tactile.

En outre, d'autres schémas de décélération peuvent être utilisés pour ralentir la vitesse de défilement v.

On notera que d'autres modes de réalisation peuvent être envisagés, dans lesquels il est possible de stopper le défilement des éléments de la liste 50, par exemple grâce à un appui bref exercé sur l'interface tactile 10. De façon similaire, il est possible d'envisager de désactiver ou de stopper la décélération de la vitesse grâce à une gesture particulière prédéterminée, telle qu'un appui prolongé exercé sur un point de contact de l'interface tactile (ex. sur le dernier point de contact).

On suppose maintenant que, durant le défilement des éléments de la liste 50, l'utilisateur souhaite accéder à d'autres modes d'affichage que le mode M1.

A cette fin, il exerce avec son doigt 11 sur l'interface tactile 10 un nouveau mouvement 12". Le mouvement 12" part d'un premier point de contact A" et va jusqu'à un second point de contact B". Il est exercé de gauche à droite dans la direction D2 perpendiculaire à la direction D1 de défilement.

Le mouvement 12" est détecté par l'unité de traitement 13, de façon similaire aux mouvements 12 et 12'. Les coordonnées des points A" et B" sont alors transmis par celle-ci au dispositif 20 de contrôle, via la liaison de données 30.

Sur réception de ces données (étape E90), le dispositif de contrôle 20 évalue la direction et le sens du mouvement 12" exercé sur l'interface tactile à partir des coordonnées des points A" et B".

Il compare la direction ainsi évaluée à la direction de défilement D1 et à la direction de déclenchement D2 stockées dans la mémoire morte 23.

Le dispositif de contrôle 20 détecte ici que le mouvement 12" a été exercé selon la direction de déclenchement D2 (étape E100), de gauche à droite.

Il déclenche alors, en réponse à ce mouvement, l'affichage des éléments de la liste sur l'écran 2 selon un deuxième mode d'affichage M2, en outre du premier mode d'affichage M1 (étape E110).

Selon un mode de réalisation, dans le deuxième mode d'affichage, des informations supplémentaires par rapport à celles affichées dans le premier mode d'affichage sont affichées pour au moins un élément de la liste. Il peut s'agir par exemple, d'informations plus détaillées ou de nature différente, telles que des photos complétant les informations textuelles présentées dans le premier mode d'affichage.

Selon un autre mode de réalisation, dans le deuxième mode d'affichage, est affiché pour au moins un élément de la liste au moins un élément d'interface utilisateur utilisable pour déclencher l'exécution d'une fonction en rapport avec cet élément de la liste. La fonction est par exemple : une commutation du téléviseur sur une chaîne lorsque la liste est une liste de programmes ou de chaînes, une ouverture de fichier en vue de son édition lorsque la liste est une liste de fichiers de données, une restitution du fichier multimédia lorsque la liste est une liste de fichiers multimédia, etc.

Pour déclencher l'affichage des éléments de la liste sur l'écran 2 selon le deuxième mode d'affichage, le dispositif de contrôle 20 envoie un nouveau signal de contrôle, par l'intermédiaire de ses moyens 25 de communication infrarouge, à l'écran 2.

Ce signal de contrôle comprend une commande de déclenchement du deuxième mode d'affichage M2, ainsi que les caractéristiques de ce deuxième mode d'affichage M2. Dans l'exemple décrit ici, le deuxième mode d'affichage M2 consiste à afficher un aperçu du programme, dans la zone de focus 51.

Sur réception de ce signal de contrôle, le défilement des éléments de la liste apparaît sur l'écran 2 selon les premier et deuxième modes d'affichage M1 et M2.

La **figure 3B** illustre un défilement des programmes de la liste 50 selon les modes M1 et M2. Conformément à ces deux modes d'affichage, la chaîne C1 et un aperçu du programme 12 sont affichés sur l'écran 2.

On notera que l'affichage selon le deuxième mode est déclenché ici pendant le défilement des éléments de la liste. Toutefois, en variante, il peut être réalisé suite à l'arrêt de ce défilement.

De manière générale, lorsque le deuxième mode d'affichage est activé, un défilement des éléments de la liste peut être obtenu en réponse à un mouvement exercé sur l'interface tactile 10 dans la direction D1 de défilement, défilement pendant lequel au moins un élément de la liste est affiché dans le deuxième mode d'affichage.

L'affichage de ce deuxième mode d'affichage permet avantageusement d'enrichir les éléments de la liste présentés à l'utilisateur sur l'écran 2.

D'autres modes d'affichage peuvent bien entendu être envisagés, soit en remplacement des premier et deuxième modes précédemment évoqués, soit en complément de ces modes.

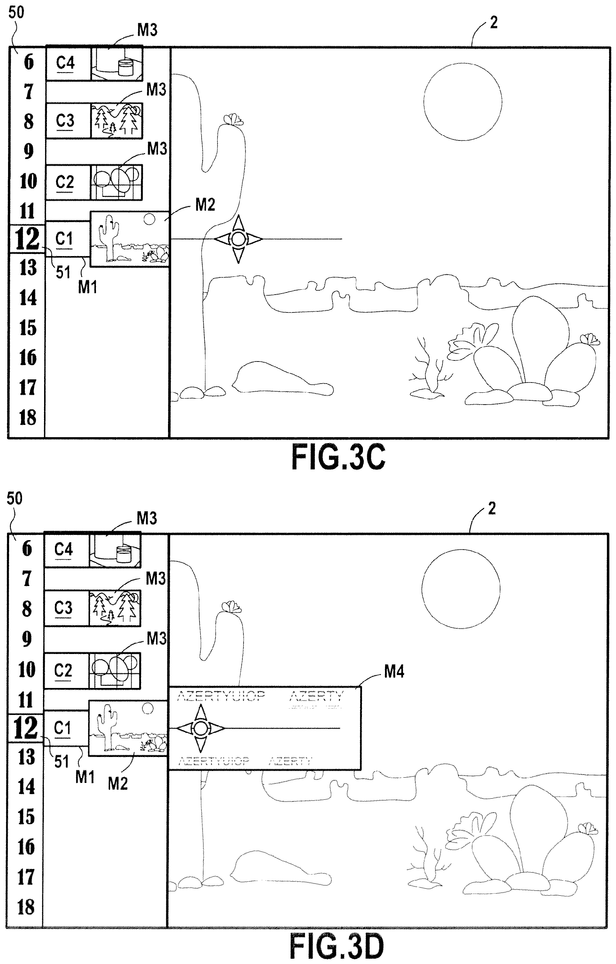

Ainsi les **figures 3C et 3D** présentent respectivement, à titre d'exemple, un troisième mode et un quatrième mode d'affichage, qui peuvent être déclenchés, de façon similaire au deuxième mode, par un mouvement exercé par l'utilisateur sur l'interface tactile dans la direction de déclenchement D2, de gauche à droite.

Le troisième mode d'affichage représenté sur la figure 3C consiste à afficher un aperçu de plusieurs programmes de la liste, et non exclusivement, contrairement au deuxième mode d'affichage, du seul programme situé dans la zone de focus 51. Par souci de clarté, seuls quelques éléments ont été représentés sur la figure 3C.

Le quatrième mode d'affichage représenté sur la figure 3D consiste quant à lui à afficher sur l'écran 2 des informations concernant le programme situé dans la zone de focus 51. Ces informations comprennent par exemple le titre du programme, sa durée, etc.

On suppose maintenant que, toujours durant le défilement des éléments de la liste 50, l'utilisateur souhaite mettre fin à l'affichage du deuxième mode M2.

A cette fin, il exerce avec son doigt 11 sur l'interface tactile 10 un nouveau mouvement 12''', partant d'un premier point de contact A''' et allant jusqu'à un second point de contact B'''. Ce mouvement est exercé cette fois-ci de droite à gauche dans la direction D2 perpendiculaire à la direction D1 de défilement, mais dans le sens inverse au sens ayant déclenché le deuxième mode d'affichage.

Le mouvement 12''' est détecté par l'unité de traitement 13, de façon similaire aux mouvements 12, 12' et 12''. Les coordonnées des points A''' et B''' sont alors transmis au dispositif 20 de contrôle, via la liaison de données 30.

Sur réception de ces données (étape E120), le dispositif de contrôle 20 évalue la direction et le sens du mouvement 12''' exercé sur l'interface tactile, à partir des coordonnées des points A''' et B'''.

Il compare la direction ainsi évaluée à la direction de défilement D1 et à la direction de déclenchement D2 stockées dans la mémoire morte 23.

Le dispositif de contrôle 20 détecte ici que le mouvement 12''' a été exercé selon la direction de déclenchement D2, de droite à gauche (étape E130).

Il met alors fin, en réponse à ce mouvement, à l'affichage des éléments de la liste sur l'écran 2 selon le deuxième mode d'affichage M2, tout en conservant l'affichage selon le premier mode d'affichage M1 (étape E140).

A cette fin, le dispositif de contrôle 20 envoie un nouveau signal de contrôle, par l'intermédiaire de ses moyens 25 de communication infrarouge, à l'écran 2.

Ce signal de contrôle comprend une commande de désactivation du deuxième mode d'affichage M2.

Sur réception de ce signal de contrôle, le défilement des éléments de la liste apparaît sur l'écran 2 selon le deuxième mode d'affichage M2 s'arrête, pour ne laisser apparaître qu'un défilement de la liste selon le mode d'affichage M1.

Le procédé de contrôle selon l'invention prend fin ici lorsque le défilement de la liste s'arrête (étape E150), par exemple parce que l'utilisateur a choisi le programme qu'il souhaite visualiser en exerçant un appui bref sur l'interface tactile 10 lorsque celui-ci apparaît dans la zone de focus 51. Un mouvement déclenchant un nouveau défilement de la liste ou un nouveau mode d'affichage peut être alors effectué par l'utilisateur sur l'interface tactile 10, provoquant une nouvelle mise en oeuvre du procédé de contrôle.

On notera, que dans le mode de réalisation décrit ici, les mouvements 12 et 12'' sont effectués successivement. Toutefois, dans un autre mode de réalisation, le dispositif de contrôle 20 peut être configuré de sorte à interpréter un mouvement effectué sur l'interface tactile selon une direction D comprenant une composante dans la direction D1 et une composante dans la direction D2. On s'accordera bien entendu des seuils de tolérance autour des directions D1 et D2, et un mouvement selon la direction D sera interprété comme déclenchant à la fois le défilement des éléments de la liste et l'affichage du deuxième mode d'affichage si la direction D est significativement distincte des directions D1 et D2 prises individuellement, c'est-à-dire au-delà des seuils de tolérance prédéfinis.

Dans ce cas, le signal de contrôle envoyé par le dispositif de contrôle 20 à l'écran 2 contiendra non seulement une commande de déclenchement du défilement des éléments de la liste mais également une commande de déclenchement de l'affichage selon le premier et le deuxième mode d'affichage de ces éléments.

L'invention est applicable à tout type de liste. Les éléments de la liste peuvent être notamment des contenus multimédia tels que des flux vidéo, des images, des applications, des fichiers de données, etc., et le dispositif d'affichage, un écran, par exemple d'ordinateur ou de téléviseur.

L'invention est applicable à tout type d'interface tactile, pavé tactile ou un écran tactile notamment.

Les directions de défilement et de modification (ou de déclenchement) du mode d'affichage courant peuvent être choisies librement, i.e., horizontale ou verticale. Pour chaque direction, les deux sens de mouvement sont de préférence détectés : de haut en bas ou de bas en haut, de gauche à droite ou de droite à gauche, etc.

Ces directions et sens des mouvements détectés peuvent en outre être adaptés aux souhaits de l'utilisateur selon que celui-ci est droitier ou gaucher ou encore être adaptés à la localisation de la liste sur l'écran : si celle-ci est dans la partie droite de l'écran (ou à l'inverse dans la partie gauche), il peut être plus naturel de développer les modes d'affichage vers la droite (ou au contraire vers la gauche) et de choisir un sens ou une direction de modification du mode d'affichage le plus approprié chaque fois.

L'invention permet une gestion optimisée de la place disponible sur l'écran d'affichage. Elle permet en effet de gérer différents niveaux d'information via les différents modes d'affichage.

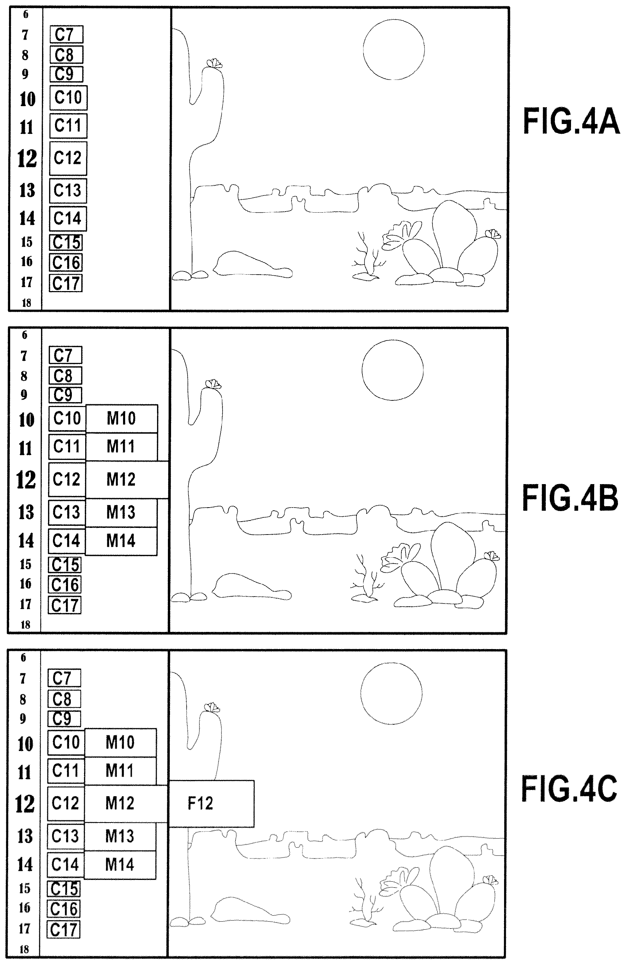

Les **figures 4A-4C** illustrent une autre manière de composer l'interface utilisateur pour trois modes d'affichage. Les mécanismes d'activation des différents modes d'affichage et de défilement sont identiques à ceux décrits en référence aux figures 3A-3D.

Comme déjà décrit ci-dessus par référence aux figures 3A-3D, dans le deuxième mode d'affichage, des informations supplémentaires par rapport à celles affichées dans le premier mode d'affichage sont affichées pour au moins un élément de la liste en réponse à un mouvement exercé sur l'interface tactile dans une direction de déclenchement distincte de la direction de défilement de la liste. Les informations affichées dans le premier mode sont dites informations de premier niveau. Les informations supplémentaires affichées dans le deuxième mode pour au moins un élément sont dites informations de deuxième niveau.

De même, dans le troisième mode d'affichage, des informations supplémentaires par rapport à celles affichées dans le deuxième mode d'affichage sont affichées pour au moins un élément de la liste en réponse à un mouvement exercé sur l'interface tactile dans une direction de déclenchement distincte de la direction de défilement de la liste. Ces informations supplémentaires affichées dans le troisième mode pour au moins un élément sont dites informations de troisième niveau.

Dans le premier mode d'affichage représenté à la figure 4A, un premier niveau d'information est disponible. Dans le cas d'une interface utilisateur pour chaînes de télévision, ce premier niveau d'information peut correspondre par exemple à un numéro de chaîne (6 à 18) et/ou à un logo C7 - C17 associé à la chaîne de télévision considérée.

Dans le deuxième mode d'affichage représenté à la figure 4B, un deuxième niveau d'information est disponible pour un ou plusieurs des éléments de la liste. Dans le cas d'une interface utilisateur pour chaînes de télévision, ce deuxième niveau d'information correspond par exemple à une vignette M10 - M14, comprenant une image représentative ou extraite du flux vidéo en cours de diffusion via la chaîne de télévision considérée.

Dans ce troisième mode d'affichage représenté à la figure 4C, un troisième niveau d'information est disponible pour un ou plusieurs des éléments de la liste. Dans le cas d'une interface utilisateur pour chaînes de télévision, ce troisième niveau d'information correspond par exemple à une fiche d'information F12 sur le programme en cours de diffusion via la chaîne de télévision considérée.

Comme illustré aux figures 4A à 4C, pour pouvoir afficher les informations de deuxième niveau, sans réduire la taille et la lisibilité des informations de premier niveau, la surface d'affichage consommée pour un élément de la liste pour afficher des informations sur cet élément augmente quand on passe du premier mode d'affichage au deuxième mode d'affichage et que des informations de premier et de deuxième niveau sont affichées pour cet élément.

Par exemple, sur la figure 4A, dans le premier mode d'affichage, la surface d'affichage consommée pour la chaîne 10 est celle consommée par le logo C10 et le numéro de chaîne 10. A ceci s'ajoute, comme représenté en figure 4B dans le deuxième mode d'affichage, la surface consommée pour la chaîne 10 par la vignette M10.

Dans un mode de réalisation, si la taille de l'écran l'impose ou si d'autres informations doivent rester visibles pendant que l'utilisateur fait défiler la liste dans les différents modes d'affichage, il prévu, dans le deuxième mode d'affichage, simultanément à cette augmentation de surface d'affichage consommée pour au moins un élément prédéfini, que le nombre d'éléments de la liste (les 5 chaînes de télévision 10 à 14) pour lesquels des informations de premier et deuxième niveau sont affichées est inférieur au nombre total d'éléments de la liste (les 11 chaînes de télévision 7 à 17) pour lesquels des informations de premier niveau sont affichées.

Ainsi, au fur et à mesure que la quantité d'information affichée sur certains des éléments de la liste augmente et que la surface d'affichage ainsi consommée augmente également, on limite la surface d'affichage totale consommée pour l'affichage d'informations sur les éléments de la liste en limitant le nombre d'éléments de la liste pour lesquels les informations de deuxième niveau sont disponibles dans le deuxième mode d'affichage.

La figure 4B illustre ainsi que seules les chaînes de télévision 10 à 14 ont des informations de deuxième niveau, c'est-à-dire ont une vignette M10 à M14 respectivement. Au final, le premier niveau d'information (numéro de chaîne et logo) est utilisé pour les éléments d'une première partie de la liste (les chaînes de télévision 7 à 17), mais le deuxième niveau d'information (vignette) est utilisé seulement pour une deuxième partie (les chaînes de télévision 10 à 14) incluse dans et distincte de cette première partie.

Cette gestion optimisée de la place disponible sur l'écran d'affichage est applicable selon la même logique au troisième mode d'affichage:

- la surface d'affichage consommée pour afficher des informations sur un élément de la liste augmente pour cet élément quand on passe du deuxième mode d'affichage au troisième mode d'affichage et que des informations de premier niveau, de deuxième niveau et de troisième niveau sont affichées pour cet élément; et

- le nombre d'éléments (uniquement la chaîne de télévision associé au canal 12) de la liste pour lesquels des informations de premier, deuxième et troisième niveau sont affichées est inférieur au nombre d'éléments de la liste pour lesquels seules des informations de premier et deuxième niveau sont affichées.

Par exemple, sur la figure 4B, dans le deuxième mode d'affichage, la surface d'affichage consommée pour la chaîne 12 est celle consommée par le logo C12, le numéro de chaîne 12 et la vignette M12. A ceci s'ajoute, comme représenté en figure 4C, dans le troisième mode d'affichage, la surface consommée pour la chaîne 12 par fiche d'information F12.

La figure 4C illustre aussi que seule la chaîne de télévision 12 a des informations de troisième niveau, c'est-à-dire a une fiche d'information F12. Au final, le troisième niveau d'information (fiche d'information) est utilisé seulement pour une troisième partie (comprenant uniquement la chaîne de télévision associé au canal 12) incluse dans et distincte de la deuxième partie (les chaînes de télévision 10 à 14).

Selon une variante, et toujours dans la logique d'optimisation de la surface d'affichage consommée, un zoom et/ou un mode de représentation différent est utilisé dans le premier mode d'affichage pour les éléments de la liste qui constitueront la deuxième partie, incluse dans la première partie, lorsque le deuxième mode d'affichage sera activé. L'utilisateur sait ainsi quels sont les éléments de la liste pour lesquels il peut obtenir un deuxième niveau d'information en passant du premier mode d'affichage au deuxième mode d'affichage. Lorsque l'utilisateur active effectivement le deuxième mode d'affichage, ce zoom ou mode de représentation différent est soit maintenu soit supprimé.

Le zoom se traduit par exemple par une taille de police de caractère plus élevée si l'information concernée comprend du texte, par une taille de vignette plus élevée. Un mode de représentation différent se traduit par exemple par l'utilisation d'une palette de couleurs différentes et/ou éléments graphiques de marquage ou détourage supplémentaires ou différents.

En alternative à un zoom sur les éléments de la deuxième partie, un mode de représentation différent (avec couleurs différentes et/ou éléments graphiques de marquage ou détourage, etc) des éléments de la deuxième partie est utilisée de manière à les distinguer des éléments de la première partie qui n'appartiennent pas à la deuxième partie.

Par exemple, sur la figure 4A ou 4B, les chaînes 10 à 14 ont un logo C10 à C14 plus grand (plus large et plus haut) que les chaînes 6 à 9 ou 15 à 18. La police de caractère utilisée pour les numéros des chaînes 10 à 14 est plus grande que celle utilisée pour les numéros des chaînes 6 à 9 ou 15 à 18. Lorsque l'utilisateur est dans le premier mode d'affichage (figure 4A), il sait ainsi qu'il peut obtenir des informations supplémentaires sur les chaînes 10 à 14 en activant le deuxième mode d'affichage (figure 4B).

Ce qui vient d'être décrit sur le zoom ou mode de représentation est transposable au troisième mode d'affichage. Un zoom et/ou un mode de représentation différent est utilisé dans le deuxième mode d'affichage (voire déjà dans le premier mode d'affichage) pour les éléments de la liste qui constitueront la troisième partie, incluse dans la deuxième partie, lorsque le troisième mode d'affichage sera activé. L'utilisateur sait ainsi quels sont les éléments de la liste pour lesquels il peut obtenir un troisième niveau d'information en passant du deuxième mode d'affichage au troisième mode d'affichage. Lorsque l'utilisateur active effectivement le troisième mode d'affichage, ce zoom ou mode de représentation différent peut être maintenu ou supprimé.

Par exemple, sur la figure 4B ou 4C, la chaîne 12 a une vignette M12 plus grande que celle des chaîne 10, 11, 13, 14. En outre, la police de caractère utilisée pour le numéro de la chaîne 12 est plus grande que celle utilisée pour les chaînes 10, 11, 13, 14. Lorsque l'utilisateur est dans le deuxième mode d'affichage (figure 4B), il sait ainsi qu'il peut obtenir des informations supplémentaires sur la chaîne 12 en activant le troisième mode d'affichage (figure 4C). Le logo C12 est également plus grand (plus large et plus haut) que le logo C9 et que le logo C10, C11, C13 ou C14. La police de caractère utilisée pour la chaîne 12 est plus grande que celle utilisé pour les chaînes 6 à 9 ou 15 à 18 ou pour la chaîne 10, 11, 13 ou 14.

L'invention a été décrite en détail pour son application à une liste de contenu audiovisuels, mais se généralise à toute liste d'éléments, quelle que soit la nature de ces éléments: liste de contenus multimédia, liste de fichiers de données, liste de contacts pour un annuaire, liste de logiciels, etc.

**Revendications**

1. Procédé de contrôle de l'affichage sur un dispositif d'affichage (2) d'une pluralité d'éléments appartenant à une liste (50), dans lequel, dans un premier mode d'affichage (M1), des informations sont affichées pour une première partie des éléments de la liste (50), un défilement (E40) des éléments de ladite liste dans le premier mode d'affichage (M1) sur le dispositif d'affichage étant provoqué en réponse (E30) à un mouvement (12) exercé sur une interface tactile (10) dans une direction (D1) de défilement déterminée, **caractérisé en ce que** l'on déclenche (E110) en outre à partir du premier mode d'affichage, en réponse à un mouvement (12") exercé sur l'interface tactile dans une direction de déclenchement (D2) distincte de la direction de défilement (D1) de la liste, un affichage sur ledit dispositif (2) de ladite liste selon un deuxième mode d'affichage (M2) dans lequel pour chaque élément d'une deuxième partie d'éléments de la liste incluse dans et distincte de la première partie des éléments de la liste, les informations affichées dans le premier mode d'affichage pour cet élément et des informations supplémentaires sont affichées, et **en ce que** l'on déclenche en outre, en réponse à un autre mouvement exercé sur l'interface tactile dans ladite direction de déclenchement, un affichage sur le dispositif de la liste selon un troisième mode d'affichage dans lequel pour chaque élément d'une troisième partie des éléments de la liste incluse dans et distincte de la deuxième partie des éléments de la listes, les informations affichées dans le premier mode d'affichage, les informations supplémentaires affichées dans le deuxième mode d'affichage et des informations supplémentaires sont affichées.

2. Procédé de contrôle selon la revendication 1, **caractérisé en ce que** le deuxième mode d'affichage est déclenché en réponse audit mouvement selon la direction de déclenchement durant le défilement des éléments de la liste dans le premier mode d'affichage (M1).

3. Procédé de contrôle selon la revendication 1, **caractérisé en ce que** dans le deuxième mode d'affichage, en réponse à un mouvement (12) exercé sur l'interface tactile (10) dans la direction (D1) de défilement, est déclenché un défilement (E40) des éléments de ladite liste pendant lequel au moins un élément est affiché dans le deuxième mode d'affichage.

4. Procédé de contrôle selon la revendication 1, **caractérisé en ce que** la direction de déclenchement (D2) de l'affichage du deuxième mode d'affichage et du troisième mode d'affichage est sensiblement perpendiculaire à la direction de défilement (D1) de la liste.

5. Procédé de contrôle selon la revendication 1, **caractérisé en ce que** l'on met fin (E140) à l'affichage du deuxième mode d'affichage (M2) en réponse à un mouvement (12") exercé sur l'interface tactile (10) dans ladite direction de déclenchement (D2), dans un sens inverse au sens du mouvement exercé pour déclencher l'affichage du deuxième mode.

6. Procédé de contrôle selon la revendication 1, **caractérisé en ce que** la vitesse (v) de défilement des éléments de ladite liste dépend de la vitesse (v0) du mouvement exercé sur l'interface tactile dans la direction de défilement (D1).

7. Procédé de contrôle selon la revendication 6, **caractérisé en ce que** l'on applique (E80) un coefficient de décélération à la vitesse (v) de défilement des éléments de ladite liste, de manière à ralentir progressivement ladite vitesse de défilement.

8. Procédé de contrôle selon la revendication 6, **caractérisé en ce que** l'on ralentit (E80) la vitesse de défilement des éléments de ladite liste en réponse à un mouvement (12') de ralentissement exercé sur l'interface tactile dans la direction de défilement et dans un sens inverse au sens du mouvement ayant provoqué le défilement de ladite liste.

9. Procédé de contrôle selon la revendication 8, **caractérisé en ce que** la vitesse de défilement (v) est ralentie en fonction de la pression (S) exercée sur l'interface tactile (10) lors du mouvement du ralentissement (12').

10. Programme d'ordinateur comportant des instructions pour l'exécution des étapes du procédé de contrôle selon l'une quelconque des revendications 1 à 9 lorsque ledit programme est exécuté par un ordinateur.

11. Support d'enregistrement lisible par un ordinateur sur lequel est enregistré un programme d'ordinateur comprenant des instructions pour l'exécution des étapes du procédé de contrôle selon l'une quelconque des revendications 1 à 9.

12. Dispositif (20) de contrôle de l'affichage sur un dispositif d'affichage (2) d'une pluralité d'éléments appartenant à une liste (50), dans lequel, dans un premier mode d'affichage (M1), des informations sont affichées pour une première partie desdits éléments de la liste (50), ledit dispositif (20) comprenant des moyens pour permettre un défilement des éléments de ladite liste dans le premier mode d'affichage (M1) sur le dispositif d'affichage en réponse à un mouvement exercé sur une interface tactile (10) dans une direction de défilement (D1) déterminée, **caractérisé en ce qu'**il comprend en outre des moyens pour déclencher, en outre à partir du premier mode d'affichage (M1), en réponse à un mouvement exercé sur l'interface tactile dans une direction de déclenchement (D2) distincte de la direction de défilement de la liste, un affichage de ladite liste sur ledit dispositif selon un deuxième mode d'affichage (M2) dans lequel, pour chaque élément d'une deuxième partie d'éléments de la liste incluse dans et distincte de la première partie des éléments de la liste, les informations affichées dans le premier mode d'affichage pour cet élément et des informations supplémentaires sont affichées, **en ce qu'**il comprend en outre des moyens pour déclencher, en réponse à un autre mouvement exercé sur l'interface tactile dans ladite direction de déclenchement, un affichage sur le dispositif de la liste selon un troisième mode d'affichage dans lequel pour chaque élément d'une troisième partie des éléments de la liste incluse dans et distincte de la deuxième partie des éléments de la listes, les informations affichées dans le premier mode d'affichage, les informations supplémentaires affichées dans le deuxième mode d'affichage et des informations supplémentaires sont affichées.

13. Dispositif de contrôle (20) selon la revendication 12, **caractérisé en ce qu'**il comprend en outre des moyens pour mettre fin à l'affichage du deuxième mode d'affichage en réponse à un mouvement exercé sur l'interface tactile dans ladite direction de déclenchement, dans un sens inverse au sens du mouvement exercé pour déclencher l'affichage du deuxième mode.

14. Dispositif de contrôle (20) selon la revendication 12, **caractérisé en ce qu'**il comprend en outre des moyens pour déterminer la vitesse de défilement des éléments de ladite liste en fonction de la vitesse du mouvement exercé sur l'interface tactile dans la direction de défilement.

15. Système (1) comprenant :

- une interface tactile (10) ; et
- un dispositif de contrôle (20) selon la revendication 12, adapté à contrôler l'affichage sur un dispositif d'affichage (2) d'une pluralité d'éléments appartenant à une liste en réponse à un mouvement exercé sur ladite interface tactile.


**Patentansprüche**

1. Verfahren zur Kontrolle der Anzeige auf einer Anzeigevorrichtung (2) mehrerer Elemente, die zu einer Liste (50) gehören, wobei Informationen in einem ersten Anzeigemodus (M1) für einen ersten Teil der Elemente der Liste (50) angezeigt werden, wobei ein Bildlauf (E40) der Elemente der Liste in dem ersten Anzeigemodus (M1) auf der Anzeigevorrichtung als Antwort (E30) auf eine Bewegung (12), die auf eine taktile Schnittstelle (10) in einer bestimmten Bildlaufrichtung (D1) ausgeübt wird, bewirkt wird, **dadurch gekennzeichnet, dass** ferner ausgehend von dem ersten Anzeigemodus als Antwort auf eine Bewegung (12"), die auf die taktile Schnittstelle in einer Auslösungsrichtung (D2), die von der Bildlaufrichtung (D1) der Liste verschieden ist, ausgeübt wird, ein Anzeigen der Liste auf der Vorrichtung (2) nach einem zweiten Anzeigemodus (M2) ausgelöst wird (E110), in dem für jedes Element eines zweiten Teils der Elemente der Liste, der in dem ersten Teil der Elemente der Liste enthalten ist und davon verschieden ist, die Informationen, die in dem ersten Anzeigemodus für dieses Element angezeigt werden, und zusätzliche Informationen angezeigt werden, und dadurch, dass ferner als Antwort auf eine andere Bewegung, die auf die taktile Schnittstelle in der Auslöserichtung ausgeübt wird, ein Anzeigen der Liste auf der Vorrichtung nach einem dritten Anzeigemodus ausgelöst wird, in dem für jedes Element eines dritten Teils der Elemente der Liste, der in dem zweiten Teil der Elemente der Liste enthalten ist und davon verschieden ist, die Informationen, die in dem ersten Anzeigemodus für angezeigt werden, die zusätzlichen Informationen, die in dem zweiten Anzeigemodus angezeigt werden, und zusätzliche Informationen angezeigt werden.

2. Verfahren zur Kontrolle nach Anspruch 1, **dadurch gekennzeichnet, dass** der zweite Anzeigemodus als Antwort auf die Bewegung in der Auslöserichtung während des Bildlaufs der Elemente der Liste in dem ersten Anzeigemodus (M1) ausgelöst wird.

3. Verfahren zur Kontrolle nach Anspruch 1, **dadurch gekennzeichnet, dass** in dem zweiten Anzeigemodus als Antwort auf eine Bewegung (12), die auf die taktile Schnittstelle (10) in der Bildlaufrichtung (D1) ausgeübt wird, ein Bildlauf (E40) der Elemente der Liste ausgelöst wird, bei dem mindestens ein Element in dem zweiten Anzeigemodus angezeigt wird.

4. Verfahren zur Kontrolle nach Anspruch 1, **dadurch gekennzeichnet, dass** die Auslöserichtung (D2) des Anzeigens des zweiten Anzeigemodus und des dritten Anzeigemodus im Wesentlichen senkrecht zu der Bildlaufrichtung (D1) der Liste ist.

5. Verfahren zur Kontrolle nach Anspruch 1, **dadurch gekennzeichnet, dass** das Anzeigen des zweiten Anzeigemodus (M2) als Antwort auf eine Bewegung (12") beendet wird (E140), die auf die taktile Schnittstelle (10) in der Auslöserichtung (D2) in einer Richtung ausgeübt wird, die der Richtung der Bewegung entgegengesetzt ist, die ausgeübt wird, um das Anzeigen des zweiten Modus auszulösen.

**6.** Verfahren zur Kontrolle nach Anspruch 1, **dadurch gekennzeichnet, dass** die Bildlaufgeschwindigkeit (v) der Elemente der Liste von der Geschwindigkeit (v0) der Bewegung abhängt, die auf die taktile Schnittstelle in der Bildlaufrichtung (D1) ausgeübt wird.

**7.** Verfahren zur Kontrolle nach Anspruch 6, **dadurch gekennzeichnet, dass** ein Verzögerungskoeffizient auf die Bildlaufgeschwindigkeit (v) der Elemente der Liste derart angewendet wird (E80), um die Bildlaufgeschwindigkeit allmählich zu verlangsamen.

**8.** Verfahren zur Kontrolle nach Anspruch 6, **dadurch gekennzeichnet, dass** die Bildlaufgeschwindigkeit der Elemente der Liste als Antwort auf eine Bewegung (12') der Verlangsamung verlangsamt wird (E80), die auf die taktile Schnittstelle in der Bildlaufrichtung und in einer Richtung ausgeübt wird, die der Richtung der Bewegung entgegengesetzt ist, die den Bildlauf der Liste bewirkt hat.

**9.** Verfahren zur Kontrolle nach Anspruch 8, **dadurch gekennzeichnet, dass** die Bildlaufgeschwindigkeit (v) in Abhängigkeit von dem Druck (S) verlangsamt wird, der auf die taktile Schnittstelle (10) bei der Bewegung der Verlangsamung (12') ausgeübt wird.

**10.** Computerprogramm, das Anweisungen für die Ausführung der Schritte des Verfahrens zur Kontrolle nach einem der Ansprüche 1 bis 9 aufweist, wenn das Programm von einem Computer ausgeführt wird.

**11.** Computerlesbares Aufzeichnungsmedium, auf dem ein Computerprogramm aufgezeichnet ist, das Anweisungen für die Ausführung der Schritte des Verfahrens zur Kontrolle nach einem der Ansprüche 1 bis 9 aufweist.

**12.** Vorrichtung (20) zur Kontrolle der Anzeige auf einer Anzeigevorrichtung (2) mehrerer Elemente, die zu einer Liste (50) gehören, wobei Informationen in einem ersten Anzeigemodus (M1) für einen ersten Teil der Elemente der Liste (50) angezeigt sind, wobei die Vorrichtung (20) Mittel aufweist, um einen Bildlauf der Elemente der Liste in dem ersten Anzeigemodus (M1) auf der Anzeigevorrichtung als Antwort auf eine Bewegung zu ermöglichen, die auf eine taktile Schnittstelle (10) in einer bestimmten Bildlaufrichtung (D1) ausgeübt wird, bewirkt wird, **dadurch gekennzeichnet, dass** sie ferner Mittel aufweist, um ausgehend von dem ersten Anzeigemodus (M1) als Antwort auf eine Bewegung, die auf die taktile Schnittstelle in einer Auslösungsrichtung (D2), die von der Bildlaufrichtung der Liste verschieden ist, ausgeübt wird, ein Anzeigen der Liste auf der Vorrichtung nach einem zweiten Anzeigemodus (M2) auszulösen, in dem für jedes Element eines zweiten Teils der Elemente der Liste, der in dem ersten Teil der Elemente der Liste enthalten ist und davon verschieden ist, die Informationen, die in dem ersten Anzeigemodus für dieses Element angezeigt werden, und zusätzliche Informationen angezeigt werden, und dadurch, dass sie ferner Mittel aufweist, um als Antwort auf eine andere Bewegung, die auf die taktile Schnittstelle in der Auslöserichtung ausgeübt wird, ein Anzeigen der Liste auf der Vorrichtung nach einem dritten Anzeigemodus auszulösen, in dem für jedes Element eines dritten Teils der Elemente der Liste, der in dem zweiten Teil der Elemente der Liste enthalten ist und davon verschieden ist, die Informationen, die in dem ersten Anzeigemodus angezeigt werden, die zusätzlichen Informationen, die in dem zweiten Anzeigemodus angezeigt werden, und zusätzliche Informationen angezeigt werden.

**13.** Vorrichtung zur Kontrolle (20) nach Anspruch 12, **dadurch gekennzeichnet, dass** sie ferner Mittel aufweist, um das Anzeigen des zweiten Anzeigemodus als Antwort auf eine Bewegung zu beenden, die auf die taktile Schnittstelle in der Auslöserichtung in einer Richtung ausgeübt wird, die der Richtung der Bewegung entgegengesetzt ist, die ausgeübt wird, um das Anzeigen des zweiten Modus auszulösen.

**14.** Vorrichtung zur Kontrolle (20) nach Anspruch 12, **dadurch gekennzeichnet, dass** sie ferner Mittel aufweist, um die Bildlaufgeschwindigkeit der Elemente der Liste in Abhängigkeit von der Geschwindigkeit der Bewegung zu bestimmen, die auf die taktile Schnittstelle in der Bildlaufrichtung ausgeübt wird.

**15.** System (1), umfassend:

- eine taktile Schnittstelle (10) et
- eine Vorrichtung zur Kontrolle (20) nach Anspruch 12, die geeignet ist, das Anzeigen auf einer Anzeigevorrichtung (2) mehrerer Elemente, die zu einer Liste gehören, als Antwort auf eine Bewegung zu kontrollieren, die auf die taktile Schnittstelle ausgeübt wird.

**Claims**

**1.** Method for controlling the display on a display device (2) of a plurality of elements belonging to a list (50), wherein, in a first display mode (M1), information is displayed for a first part of the elements of the list (50), a scrolling (E40) of the elements in said list in the first display mode (M1) on the display device being provoked in response (E30) to a movement (12) exerted on a touch interface (10) in a determined scrolling direction (D1), **characterized in that** there is also triggered (E110) from the first display mode, in response to a movement (12") exerted on the touch interface in a triggering direction (D2) distinct from the direction of scrolling (D1) of the list, a display on said device (2) of said list according to a second display mode (M2) in which, for each element of a second part of elements in the list included in and distinct from the first part of the elements in the list, the information displayed in the first display mode for this element and additional information is displayed, and **in that** there is also triggered, in response to another movement exerted on the touch interface in said triggering direction, a display on the device of the list according to a third display mode in which, for each element of a third part of the elements in the list included in and distinct from the second part of the elements in the list, the information displayed in the first display mode, the additional information displayed in the second display mode and additional information is displayed.

2. Control method according to Claim 1, **characterized in that** the second display mode is triggered in response to said movement in the direction of triggering during the scrolling of the elements in the list in the first display mode (M1).

3. Control method according to Claim 1, **characterized in that**, in the second display mode, in response to a movement (12) exerted on the touch interface (10) in the scrolling direction (D1), there is triggered a scrolling (E40) of the elements in said list during which at least one element is displayed in the second display mode.

4. Control method according to Claim 1, **characterized in that** the triggering direction (D2) of the display of the second display mode and of the third display mode is substantially at right angles to the scrolling direction (D1) of the list.

5. Control method according to Claim 1, **characterized in that** the display of the second display mode (M2) is terminated (E140) in response to a movement (12'') exerted on the touch interface (10) in said triggering direction (D2), in a direction that is opposite to the direction of the movement exerted to trigger the display of the second mode.

6. Control method according to Claim 1, **characterized in that** the speed (v) of scrolling of the elements in said list depends on the speed (v0) of the movement exerted on the touch interface in the scrolling direction (D1).

7. Control method according to Claim 6, **characterized in that** a deceleration coefficient is applied (E80) to the speed (v) of scrolling of the elements in said list, so as to progressively slow down said speed of scrolling.

8. Control method according to Claim 6, **characterized in that** the speed of scrolling of the elements in said list is slowed down (E80) in response to a slowing-down movement (12') exerted on the touch interface in the scrolling direction and in a direction that is opposite to the direction of the movement having provoked the scrolling of said list.

9. Control method according to Claim 8, **characterized in that** the speed of scrolling (v) is slowed down as a function of the pressure (S) exerted on the touch interface (10) in the slowing-down movement (12').

10. Computer program comprising instructions for the execution of the steps of the control method according to any one of Claims 1 to 9 when said program is run by a computer.

11. Computer-readable storage medium on which is stored a computer program comprising instructions for the execution of the steps of the control method according to any one of Claims 1 to 9.

12. Device (20) for controlling the display on a display device (2) of a plurality of elements belonging to a list (50), wherein, in a first display mode (M1), information is displayed for a first part of said elements in the list (50), said device (20) comprising means for allowing a scrolling of the elements in said list in the first display mode (M1) on the display device in response to a movement exerted on a touch interface (10) in a determined scrolling direction (D1), **characterized in that** it also comprises means for triggering, also from the first display mode (M1), in response to a movement exerted on the touch interface in a triggering direction (D2) distinct from the scrolling direction of the list, a display of said list on said device according to a second display mode (M2) in which, for each element of a second part of elements in the list included in and distinct from the first part of the elements in the list, the information displayed in the first display mode for this element and additional information are displayed, and **in that** it also comprises means for triggering, in response to another movement exerted on the touch interface in said triggering direction, a display on the device of the list according to a third display mode in which, for each element of a third part of the elements in the list included in and distinct from the second part of the elements in the list, the information displayed in the first display mode, the additional information displayed in the second display mode and additional information are displayed.

13. Control device (20) according to Claim 12, **charac-**

**terized in that** it also comprises means for terminating the display of the second display mode in response to a movement exerted on the touch interface in said triggering direction, in a direction that is opposite to the direction of the movement exerted to trigger the display of the second mode.

14. Control device (20) according to Claim 12, **characterized in that** it also comprises means for determining the speed of scrolling of the elements in said list as a function of the speed of the movement exerted on the touch interface in the scrolling direction.

15. System (1) comprising:

- a touch interface (10); and
- a control device (20) according to Claim 12, suitable for controlling the display on a display device (2) of a plurality of elements belonging to a list in response to a movement exerted on said touch interface.

FIG.1

E10 — START

E20 — RX A,B,vO

E30 — DETECT MOVE +D1

E40 — START SCROLLING MODE 1: v=vO

E50 — RX A',B',S

E60 — DETECT MOVE -D1

E70 — COMPUTE $\lambda$ (S)

E80 — UPDATE v $\leftarrow \dfrac{vO}{\lambda t}$

E90 — RX A'',B''

E100 — DETECT MOVE +D2

E110 — ADD M2

E120 — RX A''',B'''

E130 — DETECT MOVE -D2

E140 — DEL M2

E150 — END

**FIG.2**

**FIG.3A**

**FIG.3B**

FIG.3C

FIG.3D

FIG.4A

FIG.4B

FIG.4C

**EP 2 336 867 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2116927 A
- EP 2045073 A
- WO 2008067811 A
- WO 2008000435 A

**Littérature non-brevet citée dans la description**

- **S. YUN ; G. LEE.** Design and comparison of acceleration methods for touchpad. *Conférence on Human Factors in Computing Systems,* 2007